# EUROPEAN PATENT APPLICATION

(11) **EP 1 925 819 A1**
(43) Date of publication of application: **28.05.2008**
(21) Application number: 06380303.5
(22) Date of filing: 21.11.2006
(51) Int. Cl.: F03D 3/04, F03D 3/06

(54) **Domestic wind powered generator**

(71) Applicant: Rotártica, S.A., 48970 Basauri (Bizkaia) (ES)
(72) Inventor: Marti Andrés, Leopoldo, 08970 Sitges (Barcelona) (ES); Etxabe Otadui, Jose Maria, 20500 Mondragon (Gipuzkoa) (ES); Garatea Gerricagoitia, Xabier, 48007 Bilbao (Bizkaia) (ES); Gorritxategi Retolaza, Xabier, 48200 Durango (Bizkaia) (ES); Aldecoa-Otalora Chinchurreta, Iñigo, 48200 Durango (Bizkaia) (ES)
(74) Representative: Igartua, Ismael

(57) **Abstract**

Domestic wind powered generator that comprises a rotor (2) that comprises a rotation axis(3) that is positioned substantially at a right angle in relation to the direction of the wind, and a plurality of blades (4) disposed transversally along said rotation axis (3), each blade (4) comprising two semi-blades (4a,4b) substantially symmetrical in relation to the rotation axis (3). Said blades (4) are distributed in such a way that each blade (4) is displaced a certain angle (α) in relation to the previous blade (4), and there is a free space between the semi-blades (4a,4b) of the adjacent blades (4).

## Description

### TECHNICAL FIELD

The present invention relates to a wind powered generator of the type that comprises a rotation axis substantially at right angle to the direction of the wind.

### PRIOR ART

Wind powered generators comprise blades fitted onto a rotor that is moved by the effect of the wind on said blades, electrical energy being generated by the movement of said rotor.

Most existing wind powered generators are large in size and are not designed for their application in a domestic environment, as they take up a lot of space, create a visual impact and generate noise.

US 1697574 describes a wind rotor that is known as "Savonius rotor" and comprises a blade with two arched semi-blades disposed on the rotation axis in such a way that the cross section of said blade is S-shaped. The prior art contains many variants inspired by the "Savonius rotor".

DE 3928538 A1 describes a wind rotor that comprises a rotation axis that is positioned substantially at a right angle in relation to the direction of the wind, and a plurality of blades disposed transversally along said rotation axis, each blade comprising two semi-blades symmetrical in relation to the rotation axis, the blades having an S-shaped cross-section. Said blades are distributed in such a way that each blade is displaced at a specific angle in relation to the previous blade, thus creating a structure in the form of a "spiral staircase". The adjacent semi-blades are connected by a surface perpendicular to said semi-blades, the semi-blades and the perpendicular connecting surfaces forming a continuous surface.

### DISCLOSURE OF THE INVENTION

It is an object of the invention to provide a domestic wind powered generator whose efficiency is greater than the efficiency of the domestic wind powered generators of the prior art.

The wind powered generator of the invention comprises a rotor that comprises a rotation axis that is positioned substantially at a right angle in relation to the direction of the wind, and a plurality of blades disposed transversally along said rotation axis. Each blade comprises two semi-blades substantially symmetrical in relation to the rotation axis, and said blades are distributed in such a way that each blade is displaced a certain angle in relation to the previous blade, there being a free space between the semi-blades of the adjacent blades.

It has been proved that, by leaving a free space between the semi-blades of adjacent blades for wind to pass through, efficiency increases considerably in comparison with a configuration in which there is no such free space, as the flow of air through said free space contributes to an increase in the pulling power of the rotor.

These and other advantages and characteristics of the invention will be made evident in the light of the drawings and the detailed description thereof.

### DESCRIPTION OF THE DRAWINGS

Fig. 1 is a perspective view of a first embodiment of the rotor of the wind powered generator of the invention.
Fig. 2 is an elevational view of the rotor of Fig. 1.
Fig. 3 is a ground view of the rotor of Fig. 1.
Fig. 4 is a perspective view of a second embodiment of the rotor of the wind powered generator of the invention.
Fig. 5 is an elevational view of the rotor of Fig. 4.
Fig. 6 is a ground view of the rotor of Fig. 4.
Fig. 7 is a detail of the rotor of Fig. 4.
Fig. 8 is a perspective view of an embodiment of the wind powered generator of the invention that comprises the rotor of Fig. 1 and a directable casing.
Fig. 9 is an elevational view of the embodiment of Fig. 8 according to the A-A section of Fig. 10.
Fig. 10 is a ground view of the embodiment of Fig. 8.

### DETAILED DISCLOSURE OF THE INVENTION

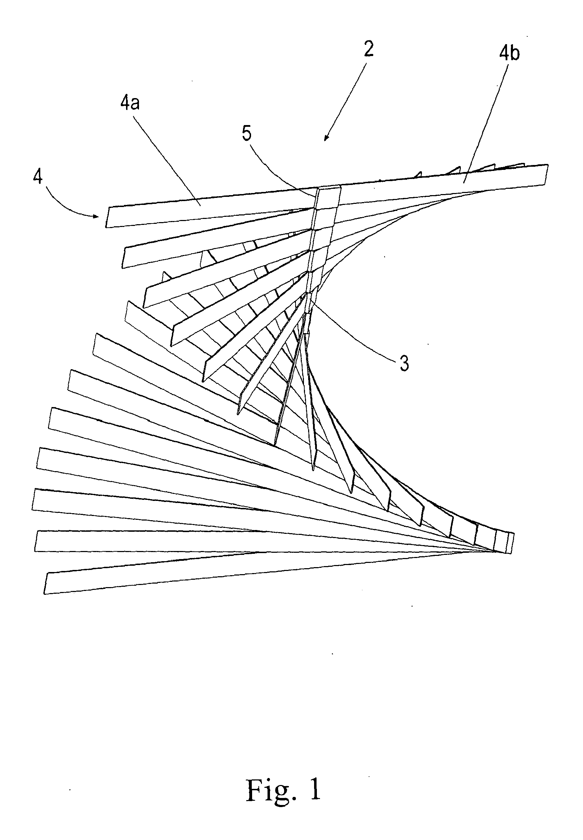

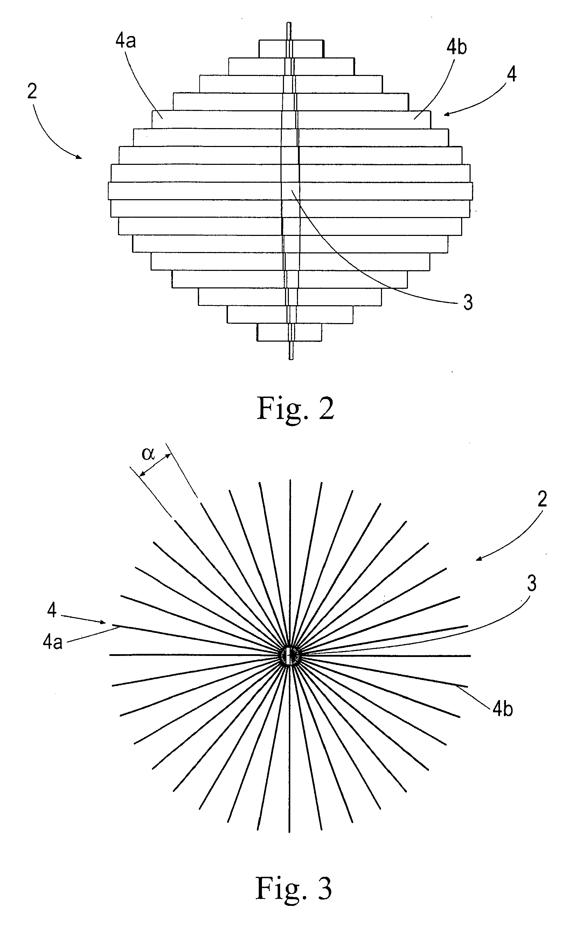

Figures 1 to 3 show a first embodiment of the rotor 2 of the domestic wind powered generator of the invention. Said rotor 2 comprises a rotation axis 3 that is positioned substantially at a right angle in relation to the direction of the wind, and a plurality of blades 4 disposed transversally along said rotation axis 3. Each blade 4 comprises two semi-blades 4a and 4b substantially symmetrical in relation to the rotation axis, and said blades 4 are distributed in such a way that each blade 4 is displaced a certain angle α in relation to the previous blade 4, there being a free space between the semi-blades 4a and 4b of the adjacent blades 4. As can be seen in the figures, in this embodiment the semi-blades 4a and 4b of the adjacent blades 4 are separated from each other. Between the first blade 4 and the last blade 4 there is a displacement of 180°, and the angle α of separation between the adjacent blades 4 is always the same. With this configuration the surface facing the wind is always the same regardless of the angular position of the blades 4, as a consequence of which it is not necessary to dispose the rotor 2 in a specific position to move from a stop position to a run position, as is the case in other rotors of the prior art. In a preferred embodiment, the angle α is of approximately 10°, there being, therefore, nineteen blades 4.

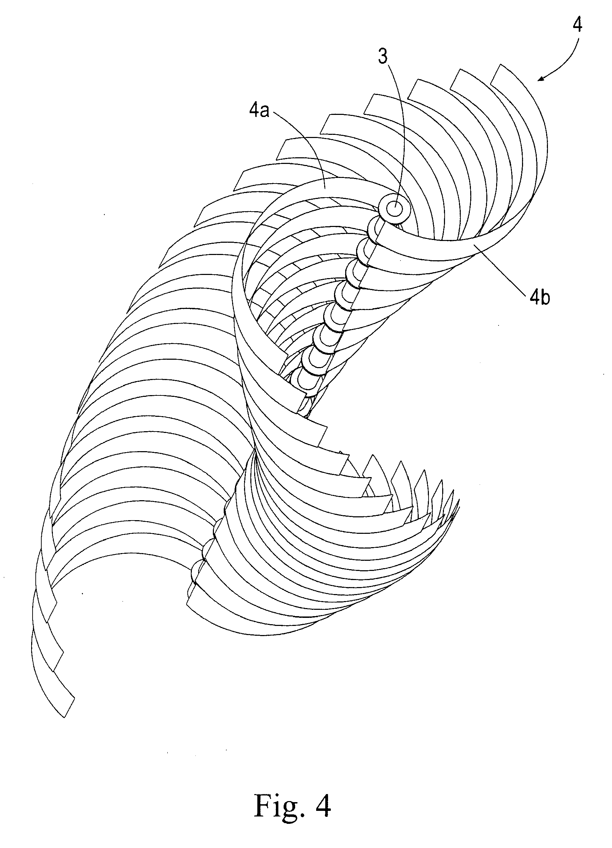

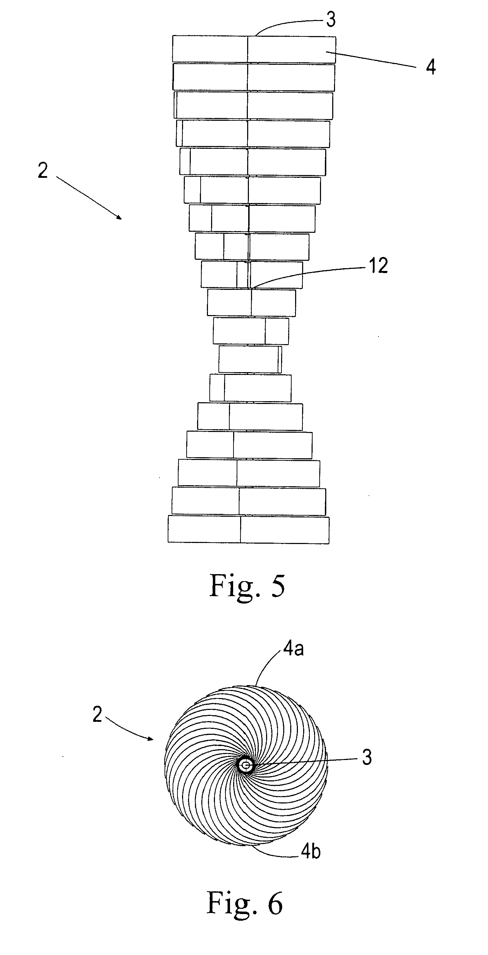

In this first embodiment, the blades 4 are flat, substantially straight sheets. In a second embodiment, shown in figures 4 to 7, the blades 4 are flat sheets with a substantially S-shaped form. With the exception of the shape of the blades 4, the rest of the aforementioned features relating to the first embodiment are also included in this second embodiment.

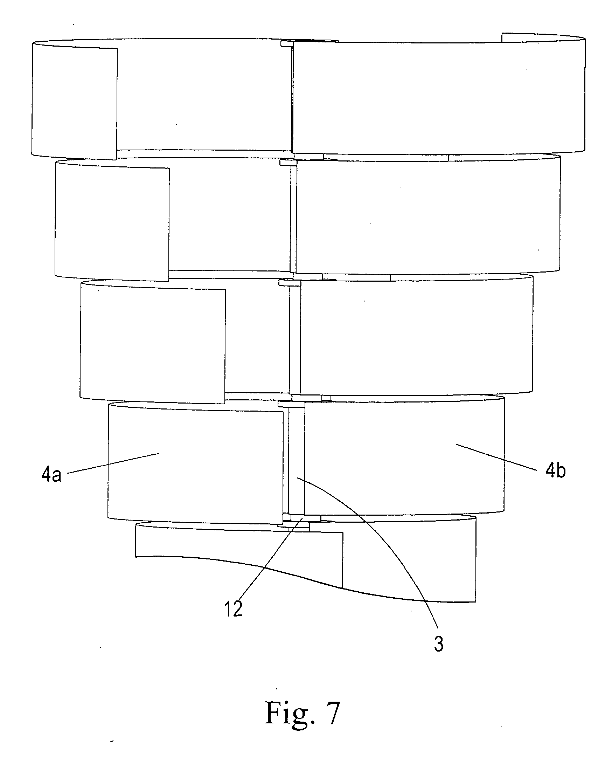

In particular in this second embodiment, although this can also be implemented in the first embodiment, the blades 4 are connected to the rotation axis 3 in such a way that there is a gap between adjacent blades 4, as can be seen in figure 7. The adjacent blades are separated from each other by bushings 12. In addition, as corresponds to the "Savonius rotor", and as shown in figure 7, there is a gap between each semi-blade 4a and 4b and the rotation axis 3.

With reference once again to the first embodiment, it can be seen that the rotation axis 3 has a substantially flat surface 5 upon which the blades 4 can be fixed. Said surface 5 has a torsion such that the blades 4 are distributed in such a way that each blade 4 is displaced approximately 10° in relation to the previous blade 4.

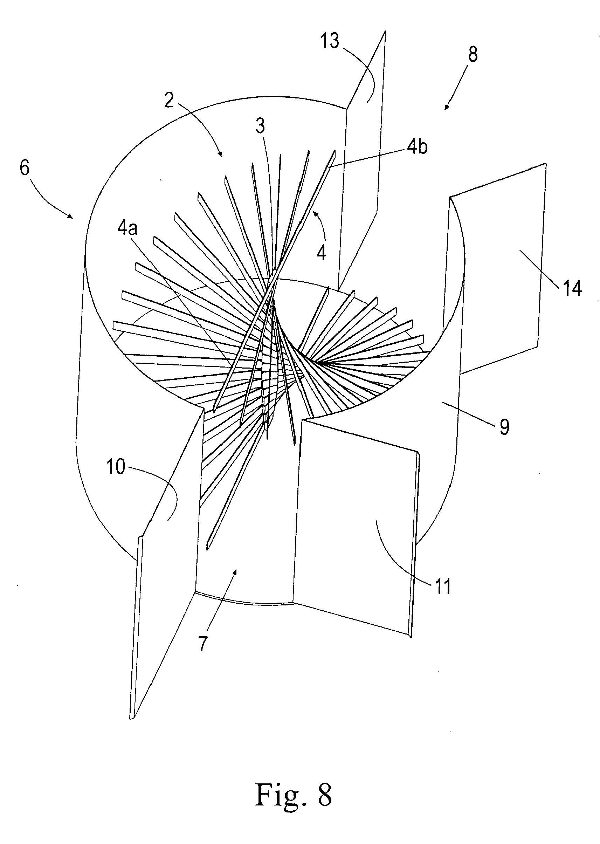

In order to substantially increase the efficiency of the wind powered generator of the invention, a directable casing 6 that envelops the rotor 2 is incorporated into said wind powered generator, as shown in figures 8 to 10. As can be seen in said figures, said directable casing 6 comprises a first aperture 7 as an air inlet and a second aperture 8 as an air outlet.

The directable casing 6 comprises a cylindrical body 9 that rotates in relation to a geometrical axis coinciding with the rotation axis 3. The position of the directable casing 6 is governed at each moment by a microprocessor (not shown in the figures), in accordance with a plurality of parameters, protecting the rotor 2 from excessively violent winds and optimising the flow of wind through said rotor 2.

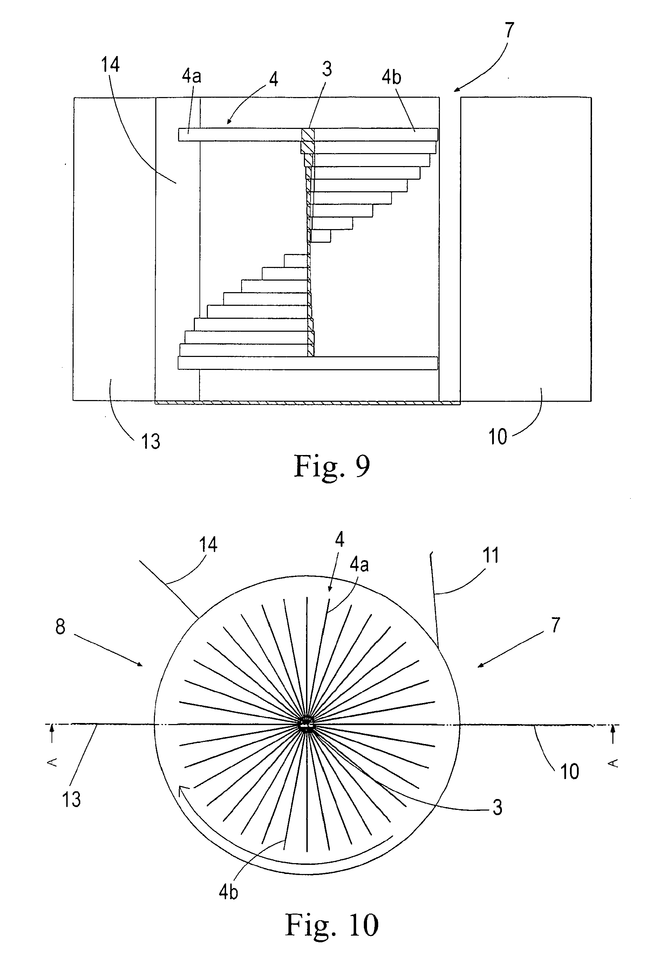

As shown in figure 10, the first aperture 7 is a longitudinal aperture of approximately 30° on the surface of the cylindrical body 9, and said cylindrical body 9 comprises auxiliary plates 10 and 11 connected to the sides of the first aperture 7. The second aperture 8 is a longitudinal aperture of approximately 45° on the surface of the cylindrical body 9. In the embodiment shown in figures 8 to 10, said second aperture 8 also comprises auxiliary plates 13 and 14.

## Claims

1. Domestic wind powered generator that comprises a rotor (2) that comprises a rotation axis (3) that is positioned substantially at a right angle in relation to the direction of the wind, and a plurality of blades (4) disposed transversally along said rotation axis (3), each blade (4) comprising two semi-blades (4a,4b) substantially symmetrical in relation to the rotation axis (3), said blades (4) being distributed in such a way that each blade (4) is displaced a certain angle (α) in relation to the previous blade(4), **characterised in that** there is a free space between the semi-blades (4a,4b) of the adjacent blades (4).

2. Domestic wind powered generator according to the preceding claim, wherein the semi-blades (4a,4b) of the adjacent blades (4) are separated from each other.

3. Domestic wind powered generator according to any of the preceding claims, wherein there is a displacement of 180° between the first blade (4) and the last blade (4).

4. Domestic wind powered generator according to claim 3, wherein the angle (α) of separation between adjacent blades (4) is always the same.

5. Domestic wind powered generator according to claim 4, wherein each angle (α) is of approximately 10° and there are, therefore, nineteen blades (4).

6. Domestic wind powered generator according to any of the preceding claims, wherein the blades (4) are flat, substantially straight sheets.

7. Domestic wind powered generator according to any of claims 1 to 5, wherein the blades (4) are flat, substantially S-shaped sheets.

8. Domestic wind powered generator according to any of the preceding claims, wherein the blades (4) are connected to the rotation axis (3) in such a way that there is a gap between adjacent blades (4).

9. Domestic wind powered generator according to any of the preceding claims, wherein the rotation axis (3) has a substantially flat surface (5) upon which the blades (4) are fixed, said surface having a torsion (5) such that the blades (4) are distributed in such a way that the angle of separation between adjacent blades (4) is the corresponding angle (α).

10. Domestic wind powered generator according to any of the preceding claims, wherein it comprises a directable casing (6) that envelops the rotor (2) and comprises a first aperture (7) as an air inlet and a second aperture (8) as an air outlet.

11. Domestic wind powered generator according to claim 10, wherein the directable casing (6) comprises a cylindrical body (9) that rotates in relation to a geometrical axis coinciding with the rotation axis (3).

12. Domestic wind powered generator according to claim 11, wherein the first aperture (7) is a longitudinal aperture of approximately 30° on the surface of the cylindrical body (9).

13. Domestic wind powered generator according to claim 12, wherein the cylindrical body (9) comprises auxiliary plates (10,11) connected to the sides of the first aperture (7).

14. Domestic wind powered generator according to claims 11 to 13, wherein the second aperture (8) is a longitudinal aperture of approximately 45° on the surface of the cylindrical body (9).
